# EUROPÄISCHE PATENTANMELDUNG

(11) **EP 3 569 065 A1**
(43) Veröffentlichungstag der Anmeldung: **20.11.2019**
(21) Anmeldenummer: 18172944.3
(22) Anmeldetag: 17.05.2018
(51) Int. Cl.: A01N 25/30, A01N 57/20, A01P 13/00

(54) **MISCHUNG MIT HERBIZIDER WIRKUNG**

(71) Anmelder: Biotensidon International AG, 6342 Baar (CH)
(72) Erfinder: SHULGA, Alexander, 76646 Bruchsal (DE); ROZA, Vildanova, 76646 Bruchsal (DE); SCHEGLOVA, Natalia, 290031 Lviv (UA); KARPENKO, Olena, 79005 Lviv (UA); PRYSTAI, Mariana, 76646 Bruchsal (DE); KARPENKO, Ilona, 76646 Bruchsal (DE); KARPENKO, Oleksandr, 76646 Bruchsal (DE); JÖGEL, Jörg, 76344 Eggenstein-Leopoldshafen (DE); THOMIDIS, Thomas, 555355 Thessaloniki (GR)
(74) Vertreter: Metten, Karl-Heinz

(57) **Zusammenfassung**

Die vorliegende Erfindung betrifft eine Mischung mit herbizider Wirkung, insbesondere eine wässrige Herbizidmischung, enthaltend ein Herbizid und ein Rhamnolipid oder Rhamnolipide, Alginate und/oder Pyoverdin oder einen supramolekularen Rhamnolipid/Alginat-Komplex oder einen supramolekularen Rhamnolipid/Alginat/Pyoverdin-Komplex. Ferner betrifft die Erfindung die Verwendung von Rhamnolipiden oder von Rhamnolipiden und Alginaten und/oder Pyoverdin oder von einem supramolekularen Rhamnolipid/Alginat-Komplex oder von einem supramolekularen Rhamnolipid/Alginat/Pyoverdin-Komplex jeweils in Kombination mit einem Herbizid zur Ertragssteigerung landwirtschaftlicher Nutzpflanzen oder als Herbizid bzw. zur Steigerung der herbiziden Wirksamkeit von Herbiziden.

## Beschreibung

Die vorliegende Erfindung betrifft eine Mischung mit herbizider Wirkung, insbesondere eine wässrige Herbizidmischung, und deren Verwendung.

Herbizide haben regelmäßig über ein sehr selektives Wirkungsspektrum zu verfügen, umwelttoxikologisch unbedenklich und schon in sehr geringen Konzentrationen wirksam zu sein. Der Einsatz von Herbiziden ist bei vielen Nutzpflanzen erforderlich, um zu vertretbaren Erträgen zu gelangen. Auch trägt der Einsatz von Herbiziden dazu bei, dass das geerntete Pflanzengut nicht durch Unkraut verunreinigt wird oder aufwändig zu reinigen ist.

Selbst Herbizide, die sich durch eine hohe Wirksamkeit auszeichnen und ursprünglich als toxikologisch unbedenklich galten, haben heutzutage weitaus anspruchsvolleren Umweltstandards zu genügen.

Es wäre daher wünschenswert, auf Herbizide zurückgreifen zu können, die nicht mehr mit den Nachteilen des Stands der Technik behaftet sind. Daher lag der vorliegenden Erfindung die Aufgabe zugrunde, Herbizide verfügbar zu machen, die den gewachsenen Umweltstandards genügen und die sich insbesondere durch eine sehr hohe Wirksamkeit und eine ausgeprägte Umweltverträglichkeit auszeichnen.

Demgemäß wurde eine Mischung mit herbizider Wirkung gefunden, insbesondere eine wässrige Herbizidmischung, gefunden enthaltend neben Wasser mindestens ein Herbizid und mindestens ein Rhamnolipid oder mindestens ein Herbizid und Rhamnolipide, Alginate und/oder Pyoverdin oder mindestens ein Herbizid und mindestens einen supramolekularen Rhamnolipid/Alginat-Komplex, insbesondere mit einem Molekulargewicht nicht oberhalb von 1 x 10⁶ kDa, oder mindestens ein Herbizid und mindestens einen supramolekularen Rhamnolipid/Alginat/Pyoverdin-Komplex. Selbstverständlich können in diesen erfindungsgemäßen Mischungen neben dem mindestens einen Herbizid und Rhamnolipiden auch Rhamnolipid/Alginat-Komplexe und/oder Rhamnolipid/Alginat/Pyoverdin-Komplexe vorliegen. Auch können in diesen wässrigen Mischungen neben dem mindestens einen Herbizid Rhamnolipid/Alginat-Komplexe und zugleich Rhamnolipid/Alginat/Pyoverdin-Komplexe vorhanden sein, ohne dass gleichzeitig freies Rhamnolipid zugegen ist. In den vorangehend genannten Mischungen können in weiteren Ausführungsformen ferner freies Alginat und/oder freies Pyoverdin vorliegen, können aber auch fehlen.

Der Begriff "Herbizidmischung" im Sinne der Erfindung umfasst zunächst auch Zusammensetzungen, in denen nur ein Herbizid vorliegt. Dieser Begriff soll vielmehr aufzeigen, dass dieses mindestens eine Herbizid in Mischung mit einem Rhamnolipid oder mit Rhamnolipiden, Alginaten und/oder Pyoverdin oder mit mindestens einem supramolekularen Rhamnolipid/Alginat-Komplex oder mit mindestens einem supramolekularen Rhamnolipid/Alginat/Pyoverdin-Komplex vorliegt. Selbstverständlich können in dieser Herbizidmischung auch zwei oder mehrere unterschiedliche Herbizide vorliegen.

Bei Pyoverdin handelt sich um fluoreszierende eisenbindende Peptide enthaltend einen Dihydroxychinolin-Rest. Als Chromophor kommt hierbei regelmäßig (1S)-₅-Amino-2,3-dihydro-8,9-dihydroxy-1H-pyrimido[1,2-a]-chinolin-1-carboxylsäure zum Einsatz.

In den erfindungsgemäßen Mischungen können somit neben dem mindestens einen Herbizid ein oder mehrere Rhamnolipide oder alternativ oder zusätzlich mindestens ein supramolekularer Rhamnolipid/Alginat-Komplex und/oder mindestens ein supramolekularer Rhamnolipid/Alginat/Pyoverdin-Komplex vorliegen. Die erfindungsgemäßen Mischungen enthaltend supramolekulare Rhamnolipid/Alginat-Komplexe und/oder supramolekulare Rhamnolipid/Alginat/Pyoverdin-Komplexe sind in einer zweckmäßigen Ausführungsform im Wesentlichen frei von Rhamnolipiden, die nicht gebunden in den genannten Komplexen vorliegen. In den genannten supramolekularen Komplexen liegen die jeweiligen Bestandteile, Rhamnolipid und Alginat bzw. Rhamnolipid, Alginat und Pyoverdin, zumindest in Teilen miteinander verbunden vor. Supramolekulare Komplexe im Sinne der vorliegenden Erfindung umfassen zwei oder mehr Moleküle oder Ionen, die nicht über kovalente Bindungen, sondern über andere Kräfte wie Wasserstoffbrückenbindungen, Ionenpaar-Bildung, Säure/Base-Wechselwirkungen, koordinative Wechselwirkungen wie Metall/Ligand-Wechselwirkungen, Van-der-Waals-Kräfte und/oder hydrophobe Wechselwirkungen zusammengehalten werden.

Die Rhamnolipid/Alginat-Komplexe können wie auch die Rhamnolipid/Alginat/Pyoverdin-Komplexe können über ein oder mehrere Rhamnolipid-Einheiten und/oder über ein oder mehrere Alginat-Einheiten verfügen. Auch können in einem Rhamnolipid/Alginat/Pyoverdin-Komplex ein oder mehrere Pyoverdin-Einheiten, ein oder mehrere Rhamnolipid-Einheiten und/oder ein oder mehrere Alginat-Einheiten zugegen sein. Diese Einheiten werden dabei, wie vorangehend dargelegt, nicht über kovalente Bindungen aneinander gebunden, sondern über die genannten anderen Kräfte wie Wasserstoffbrückenbindungen, Ionenpaar-Bildung, Säure/Base-Wechselwirkungen, koordinative Wechselwirkungen wie Metall/Ligand-Wechselwirkungen, Van-der-Waals-Kräfte und/oder hydrophobe Wechselwirkungen, vorzugsweise über Wasserstoffbrückenbindungen, Säure/Base-Wechselwirkungen, koordinative Wechselwirkungen wie Metall/Ligand-Wechselwirkungen, Van-der-Waals-Kräfte und/oder hydrophobe Wechselwirkungen. In einer besonders bevorzugten Ausgestaltung verfügt der Rhamnolipid/Alginat/Pyoverdin-Komplex über drei Rhamnolipid-Einheiten, eine Alginat-Einheit und eine Pyoverdin-Einheit.

Die Rhamnolipide liegen in den erfindungsgemäßen Mischungen vorzugsweise als Mono- und/oder Di-Rhamnolipide vor. Bevorzugt sind solche erfindungsgemäßen Mischungen in denen gleichzeitig Mono- und Di-Rhamnolipide zugegen sind. Besonders zufriedenstellende Resultate stellen sich auch dadurch ein, dass die Mono- und/oder Di-Rhamnolipide jeweils ein oder zwei β-Hydroxyfettsäurereste, vorzugsweise mit derselben Kettenlänge, aufweisen. Hierbei ist vorzugsweise vorgesehen, dass die β-Hydroxyfettsäure-Einheiten auf C₈-bis C₁₆-Fettsäuren, vorzugsweise C₈- bis C₁₂- Fettsäuren, enthaltend keine, eine oder zwei Doppelbindungen basieren. Ganz besonders bevorzugt kommen in den Rhamnolipiden der erfindungsgemäßen Mischungen beta-Hydroxyfettsäuren-Einheiten zum Einsatz, die über keine Doppelbindung verfügen, beispielsweise beta-Hydroxydecansäure (auch kurz 3-OH-C10 oder C10 genannt). Besonders geeignete Rhamnolipide umfassen demgemäß Mono-Rhamnolipid-C10 (auch RL1 genannt), Di-Rhamnolipid-C10 (auch RL2 genannt), Mono-Rhamnolipid-C10C10 (auch RL 3 genannt) und/oder Di-Rhamnolipid-C10C10 (auch RL4 genannt). Solche erfindungsgemäßen Mischungen haben sich hierbei als sehr zweckmäßig erwiesen, in denen RL3 und RL4 enthalten sind, insbesondere als Hauptbestandteile der in der Mischung vorliegenden Rhamnolipide oder als ausschließliche Rhamnolipid-Komponenten. Demgemäß umfassen die erfindungsgemäßen Mischungen vorteilhafter Weise Rhamnolipide, die aus zwei Rhamnose-Einheiten und zwei Caprinsäureeinheiten gebildet sind. Besonders vorteilhaft liegen diese Rhamnolipide als Hauptkomponente der Rhamnolipide in den erfindungsgemäßen Mischungen vor.

In einer bevorzugten Ausführungsform der erfindungsgemäßen Mischung ist vorgesehen, dass in dem supramolekularen Rhamnolipid/Alginat-Komplex 60 bis 98 Gew.-% und vorzugsweise 80 bis 95 Gew.-% Rhamnolipid sowie 2 bis 40 Gew.-% und vorzugsweise 5 bis 20 Gew.-% Alginat vorliegen.

In einer bevorzugten Ausgestaltung der erfindungsgemäßen Mischung ist vorgesehen, dass das Gewichtsverhältnis von Mono-Rhamnolipiden und Di-Rhamnolipiden in den supramolekularen Rhamnolipid/Alginat-Komplexen und/oder in den supramolekularen Rhamnolipid/Alginat/Pyoverdin-Komplexen im Bereich von 1:15 bis 5:0,5 und bevorzugt im Bereich von 1:9 bis 1:1 liegt.

Besonders vorteilhafte Eigenschaften lassen sich in verlässlicher Weise auch mit solchen erfindungsgemäßen Mischungen erhalten, in denen neben dem supramolekularen Rhamnolipid/Aiginat-Komplex und/oder dem supramolekularen Rhamnolipid/Alginat/Pyoverdin-Komplex freies Alginat vorliegt, vorzugsweise nicht oberhalb von 40 Gew.-% und besonders bevorzugt nicht oberhalb von 20 Gew.-%, beispielsweise im Bereich von 5 bis 18 Gew.-%, jeweils bezogen auf das Gesamtgewicht der supramolekularen Rhamnolipid/Alginat-Komplexe und der supramolekularen Rhamnolipid/Alginat/Pyoverdin-Komplexe.

Besonders bevorzugt sind auch solche erfindungsgemäßen Mischungen, in denen zusätzlich zu dem supramolekularen Rhamnolipid/Alginat-Komplex und/oder dem supramolekularen Rhamnolipid/Alginat/Pyoverdin-Komplex freies Pyoverdin vorliegt, vorzugsweise in einer Menge im Bereich von 0,001 bis 5 Gew.-% und besonders bevorzugt im Bereich von 0,01 bis 2,0 Gew.-%, jeweils bezogen auf das Gesamtgewicht der supramolekularen Rhamnolipid/Alginat-Komplexe und der supramolekularen Rhamnolipid/Alginat/Pyoverdin-Komplexe.

Auch haben sich solche erfindungsgemäßen Mischungen als sehr zweckmäßig erwiesen, bei denen der supramolekulare Rhamnolipid/Alginat/Pyoverdin-Komplex 55 bis 97,99 Gew.-%, vorzugweise 78 bis 97,49 Gew.%, an Rhamnolipiden, 2,0 bis 40 Gew.-%, vorzugsweise 2,5 bis 20 Gew.-% an Alginaten, und 0,01 bis 5 Gew.-%, vorzugsweise 0,01 bis 2Gew.-%, an Pyoverdin enthält.

In einer zweckmäßigen Ausgestaltung zeichnet sich die erfindungsgemäße Mischung dadurch aus, dass diese Di-Rhamnolipide und Mono-Rhamnolipide enthält, wobei darin 60 bis 95 Gew.-%, insbesondere 75 bis 90 Gew.-%, Di-Rhamnolipide, insbesondere di-RL-C10C10, und 5 bis 40 Gew.-%, insbesondere 10 bis 25 Gew.-%, Mono- Rhamnolipide, insbesondere mono-RL-C10C10, jeweils bezogen auf das Gesamtgewicht der supramolekularen Rhamnolipid/Alginat-Komplexe und/oder der supramolekularen Rhamnolipid/Alginat/Pyoverdin-Komplexe, vorliegen. Das Gewichtsverhältnis der genannten di-Rhamnolipide zu den mono-Rhamnolipiden ist dabei vorzugsweise größer 6:4.

Die in den erfindungsgemäßen Mischungen zum Einsatz kommenden supramolekularen Rhamnolipid/Alginat-Komplexe verfügen bevorzugt über ein Molekulargewicht nicht oberhalb von 1 x 10² bis 1 x 10⁶ kDa, besonders bevorzugt im Bereich von 1,0 x 10³ bis 8,0 x 10⁴ kDa und insbesondere im Bereich von 7,5 x 10³ bis 9,0 x 10³ kDa.

Für die Austragung als Herbizid haben sich insbesondere auch solche erfindungsgemäßen wässrigen Mischungen als zweckmäßig erwiesen, bei denen die Rhamnolipide oder supramolekularen Rhamnolipid/Alginat-Komplexen oder supramolekularen Rhamnolipid/Alginat/Pyoverdin-Komplexe darin in einer Konzentration im Bereich von 0,01 mg bis 8 g/L, vorzugsweise im Bereich von 0,1 bis 6 g/L und besonders bevorzugt im Bereich von 0,5 bis 4,5 g/L, vorliegen.

Durch den Einsatz von Rhamnolipiden, supramolekularen Rhamnolipid/Alginat-Komplexen und supramolekularen Rhamnolipid/Alginat/Pyoverdin-Komplexen lässt sich die Wirkung gleichzeitig in der Mischung anwesender Herbizide signifikant steigern. Auf diese Weise kann die Wirkkonzentration von zum Beispiel bekannten Herbiziden drastisch reduziert werden. Geeignete Herbidzide, auf die für die erfindungsgemäßen Mischungen dabei zurückgegriffen werden kann, können insbesondere ausgewählt werden aus der Gruppe bestehend aus *N*-(Phosphonomethyl)glycin (siehe z.B. WO 92/00377), 2-Amino-4-(hydroxy-methyl-phosphoryl)butansäure (siehe z.B. EP 242 236), Sulfonylharnstoffen (siehe z.B. EP 257 993), Chlorphenoxyessigsäuren, Benzoylisoxazolen, Phenylharnstoffen, ALS-Hemmer, HPPD-Hemmer, ACCase-Hemmer, insbesondere Cyclohexanedione (DIM), Phenylpyrazoline und/oder Aryloxyphenoxypropionate, Triazine und deren Mischungen. Besonders wirksam lässt sich mit den erfindungsgemäßen Mischungen auch die herbizide Wirkung von N-(Phosphonomethyl)glycin und 2-Amino-4-(hydroxy-methyl-phosphoryl)butansäure, besonders bevorzugt von N-(Phosphonomethyl)glycin, steigern.

Die beobachtete überraschende Wirksamkeit stellt sich dabei sowohl ein bei Applikation der erfindungsgemäßen Mischung auf Nutzpflanzen bzw. auf Schadpflanzen/Unkräuter als auch bei Applikation auf einer Ackerfläche im Vorfeld einer geplanten Bepflanzung mit Nutzpflanzen.

Mit der vorliegenden Erfindung wurde demgemäß ebenfalls die Verwendung von Rhamnolipiden in Kombination mit mindestens einem Herbizid oder von Rhamnolipiden und Alginaten und/oder Pyoverdin in Kombination, insbesondere im Mischung vorliegend, mit mindestens einem Herbizid oder von mindestens einem supramolekularen Rhamnolipid/Alginat-Komplex, insbesondere mit einem Molekulargewicht nicht oberhalb von 1 x 10⁶ kDa, mit mindestens einem Herbizid oder von mindestens einem supramolekularen Rhamnolipid/Alginat/Pyoverdin-Komplex in Kombination mit mindestens einem Herbizid zur Ertragssteigerung landwirtschaftlicher Nutzpflanzen und/oder als Herbizid gefunden.

Ebenfalls wurde überraschend gefunden, dass sich durch den Einsatz von Rhamnolipiden oder von Rhamnolipiden und Alginaten und/oder Pyoverdin oder von bevorzugt mindestens einem supramolekularen Rhamnolipid/Alginat-Komplex, insbesondere mit einem Molekulargewicht nicht oberhalb von 1 x 10⁶ kDa, oder von besonders bevorzgut mindestens einem supramolekularen Rhamnolipid/Alginat/Pyoverdin-Komplex, die herbizide Wirksamkeit von Herbiziden steigern lässt. Dies trifft insbesondere auch auf die Behandlung von monokotylen und/oder dikotylen Unkräutern zu.

Geeignete Rhamnolipid/Alginat-Komplexe und geeignete Rhamnolipid/Alginat/Pyoverdin-Komplexe erhält man z.B. auf biotechnologischem Wege durch Verwendung eines Stamms des Bakteriums Pseudomonas aeruginosa, wobei Pseudomonas aeruginosa JRV-L, Pseudomonas aeruginosa PAO1, Pseudomonas aeruginosa ATCC27853 und Pseudomonas aeruginosa Pa6 besonders bevorzugt sind. Als besonders geeignet haben sich hierbei auch Pseudomonas aeruginosa PAO1 und Pseudomonas aeruginosa ATCC27853 erwiesen.

Geeignete Nährmedien können dabei Harnstoff (beispielsweise im Bereich von 0,5 bis 3 g/Liter, vorzugsweise im Bereich von 1 bis 2 g/Liter), Kaliumdihydrogenphosphat (beispielsweise im Bereich von 0,5 bis 3 g/Liter, vorzugsweise im Bereich von 1 bis 2 g/Liter), Dikaliumhydrogenphosphat (beispielsweise im Bereich von o, 2 bis 2,5 g/Liter, vorzugsweise im Bereich von 0,8 bis 1,6 g/Liter), Magnesiumsulfat (beispielsweise im Bereich von 0,01 bis 1 g/Liter, vorzugsweise im Bereich von 0,1 bis 0, 5 g/Liter), Hefeextrakt (beispielsweise im Bereich von 0,1 bis 1,5 g/Liter, vorzugsweise im Bereich von 0,2 bis 1,0 g/Liter) und eine Kohlenstoffquelle, beispielsweise Glucose, Glycerin und/oder pflanzliche Öle (beispielsweise im Bereich von 5 bis 30 g/Liter, vorzugsweise im Bereich von 10 bis 24 g/Liter) enthalten.

Geeignete Rhamnolipid/Alginat-Komplexe und Rhamnolipid/Alginat/Pyoverdin-Komplexe sind insbesondere erhältlich mittels Fermentation in Gegenwart von Pseudomonas aeruginosa JRV-L, Pseudomonas aeruginosa PAO1, Pseudomonas aeruginosa ATCC27853 und/oder Pseudomonas aeruginosa Pa6, z.B. von Pseudomonas aeruginosa PAO1 und/oder Pseudomonas aeruginosa ATCC27853, und Acidifizierung des Überstands. Vorzugsweise wird der pH-Wert beim Acidifizierungsschritt auf Werte in dem Bereich von 1 bis 4 eingestellt, wobei regelmäßig ein Wert im Bereich von 1,0 bis 2,0 verwendet wird. Im Zuge der geschilderten Verringerung des pH-Wertes fallen der Rhamnolipid/Alginat-Komplex und/oder der Rhamnolipid/Alginat/Pyoverdin-Komplex aus. Der erhaltene Niederschlag kann weiteren Aufreinigungsschritten unterzogen werden. Dies ist für den Erhalt der erfindungsgemäßen Wirkungen jedoch nicht zwingend erforderlich. Eine Aufkonzentration des zellfreien Überstands kann auch mittels Sprühtrocknung, Vakuumverdampfung, Membrantechnologie oder Lyophylisieren vorgenommen werden. Unter den vorangehend genannten Möglichkeiten ist die Sprühtrocknung bevorzugt. Durch die beschriebene Aufreinigung kann der Rhamnolipid/Alginat-Komplex sowie gegebenenfalls auch der Rhamnolipid/Alginat/Pyoverdin-Komplex auch in kristalliner Form erhalten werden.

In einer besonders zweckmäßigen Ausgestaltung werden die Rhamnolipid/Alginat-Komplexe und/oder die Rhamnolipid/Alginat/Pyoverdin-Komplexe in Form des abgetrennten, gegebenenfalls aufgereinigten, Feststoffanteils aus der fermentativen Herstellung der Mischung, vorzugsweise in Gegenwart von Pseudomonas aeruginosa, insbesondere von Pseudomonas aeruginosa JRV-L, Pseudomonas aeruginosa PAO1, Pseudomonas aeruginosa ATCC27853 und/oder Pseudomonas aeruginosa Pa6, z.B. von Pseudomonas aeruginosa PAO1 und/oder Pseudomonas aeruginosa ATCC27853, erhalten. Des Weiteren kann ein zellfreier Kulturüberstand bis zum pulverförmigen Produkt getrocknet werden. In der Regel wird nach der fermentativen Herstellung ein zellfreier Überstand gewonnen, welcher azidifiziert wird, vorzugsweise auf einen pH-Wert im Bereich von 2 bis 4, besonders bevorzugt im Bereich von 1 bis 2, beispielsweise auf etwa 2,0.

In einer Ausführungsform wird die Fermentationsbrühe einer sogenannten Mikrofiltration mittels Membranfilter unterworfen, um Zellbestandteile abzutrennen. Die Membranfilter basieren regelmäßig auf keramischen oder polymeren Materialien, beispielsweise auf Polysulfonen. Geeignete Porengrößen dieser Membranfilter für die Mikrofiltration liegen bei 100 nm und darüber, vorzugsweise im Bereich von 0,1 bis 0,2 µm, beispielsweise bei etwa 0,1 µm. Das nach dem Filtrationsschritt erhaltene System stellt im Allgemeinen eine klare Flüssigkeit dar. Diese hat regelmäßig einen pH-Wert im Bereich von 8 bis 9. In diesem wässrigen System liegen neben dem Rhamnolipid/Alginat-Komplex und/oder dem Rhamnolipid/Alginat/Pyoverdin-Komplex häufig auch noch Mineralsalze und gegebenenfalls organische Bestandteile wie Glycerin vor. Dieses wässrige System kann bereits als solches für die in dieser Anmeldeschrift genannten erfindungsgemäßen Verwendungen genutzt werden. Selbstverständlich ist es möglich, das nach der Mikrofiltration erhaltene wässrige System einer sogenannten Ultrafiltration zu unterziehen. Die Porengröße der hierbei jeweils zum Einsatz kommenden Filter liegt üblicherweise zwischen 2 bis 100 nm. Mit Ultrafiltration gelingt es, weitere Bestandteile, beispielsweise Nährsubstrat oder Salze, aus dem wässrigen System enthaltend die Komplexe zu entfernen. Optional kann in einem weiteren Verfahrensschritt, d.h. nach der Mikro- und/oder Ultrafiltration, das gefilterte wässrige System in die Trockne überführt werden, beispielsweise durch Vakuumverdampfung.

In einer bevorzugten Ausgestaltung liegen in den durch Mikro- und insbesondere durch Ultrafiltration erhaltenen wässrigen Systemen keine freien Rhamnolipide vor. Vielmehr sind diese in den genannten supramolekularen Rhamnolipid/Alginat- bzw. den supramolekularen Rhamnolipid/Alginat/Pyoverdin-Komplexen gebunden. Als Alternative zur Isolierung dieser Komplexe über das Entfernen von Wasser können diese Komplexe aus den wässrigen Systemen, insbesondere den mikro- und/oder ultrafiltrierten Systemen, durch Verringerung des pH-Wertes auf Werte im Bereich von 1 bis 4, insbesondere im Bereich von 1,0 bis 2,0, ausgefällt werden.

Durch die erfindungsgemäße Mitverwendung von Rhamnolipiden oder von supramolekularen Rhamnolipid/Alginat- bzw. supramolekularen Rhamnolipid/Alginat/Pyoverdin-Komplexen bei der Behandlung von Nutzpflanzen mit Herbiziden konnte die Effizienz der Unkrautvernichtung um mehr als das fünffache gesteigert werden. Auf diese Weise lässt sich die Konzentration an Herbiziden drastisch reduzieren. Von Vorteil ist ebenfalls, dass Rhamnolipide ohne weiteres biologisch abbaubar sind und nicht zu einer Kontamination des behandelten Bodens beitragen. Hierbei können Herbizide und Rhamnolipide bzw. Rhamnolipide, Alginate und/oder Pyoverdin oder supramolekulare Rhamnolipid/Alginat- und/oder supramolekulare Rhamnolipid/Alginat/Pyoverdin-Komplexe sowohl gemeinsam, d.h. in einer Mischung vorliegend, verabreicht werden, was bevorzugt ist, als auch separat aufeinanderfolgend in beliebiger Reihenfolge auf das Nutzpflanzenareal ausgebracht werden. In einer Ausführungsvariante kann die erfindungsgemäße Mischung dabei vor dem Keimen auf die Erdoberfläche appliziert werden. Auf diese Weise kann das Auflaufen der Unkrautkeimlinge verhindert werden oder die Unkräuter wachsen nur bis zum Keimblattstadium heran und sterben anschließend ab. Alternativ oder zusätzlich kann die erfindungsgemäße Mischung auch im sogenannten Nachauflaufverfahren auf die Pflanzenteile der Schadpflanze aufgebracht werden, um so einen Wachstumsstop herbeizuführen.

Mit der vorliegenden Erfindung geht folglich die überraschende Erkenntnis einher, dass durch die Mitverwendung von Rhamnolipiden oder von supramolekularen Rhamnolipid/Alginat- bzw. supramolekularen Rhamnolipid/Alginat/Pyoverdin-Komplexen die Wirksamkeit von Herbiziden drastisch erhöhen lässt, und zwar ohne auf Maßnahmen, die Umwelt belasten könnten, zurückgreifen zu müssen. Im Gegenteil trägt die erfindungsgemäße technische Lehre zu einer merklichen Schonung von Mensch und Umwelt bei.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Mischung mit herbizider Wirkung, insbesondere wässrige Herbizidmischung, enthaltend
mindestens ein Herbizid und mindestens ein Rhamnolipid oder
mindestens ein Herbizid und Rhamnolipide, Alginate und/oder Pyoverdin oder
mindestens ein Herbizid und mindestens einen supramolekularen Rhamnolipid/Alginat-Komplex, insbesondere mit einem Molekulargewicht nicht oberhalb von 1 x 10⁶ kDa, oder mindestens ein Herbizid und mindestens einen supramolekularen Rhamnolipid/Alginat/Pyoverdin-Komplex.

2. Mischung nach Anspruch 1, **dadurch gekennzeichnet, dass**
in dem supramolekularen Rhamnolipid/Alginat-Komplex 60 bis 98 Gew.-% und vorzugsweise 80 bis 95 Gew.-% Rhamnolipid sowie 2 bis 40 Gew.-% und vorzugsweise 5 bis 20 Gew.-% Alginat vorliegen.

3. Mischung nach Anspruch 1 oder 2, **dadurch gekennzeichnet, dass**
die Rhamnolipide Mono-Rhamnolipide und/oder Di-Rhamnolipide umfassen, insbesondere jeweils enthaltend ein oder zwei β-Hydroxyfettsäure-Einheiten, vorzugweise mit derselben Kettenlänge, oder insbesondere jeweils enthaltend ein oder zwei Caprinsäureeinheiten.

4. Mischung nach Anspruch 3, **dadurch gekennzeichnet, dass**
die β-Hydroxyfettsäure-Einheiten auf C₈- bis C₁₆-Fettsäuren, vorzugsweise C₈- bis C₁₂- Fettsäuren, enthaltend keine, eine oder zwei Doppelbindungen, insbesondere keine Doppelbindungen, basieren.

5. Mischung nach Anspruch 3 oder 4, **dadurch gekennzeichnet, dass**
das Gewichtsverhältnis von Mono-Rhamnolipiden und Di-Rhamnolipiden in den supramolekularen Rhamnolipid/Alginat-Komplexen und/oder in den supramolekularen Rhamnolipid/Alginat/Pyoverdin-Komplexen im Bereich von 1:15 bis 5:0,5 und bevorzugt im Bereich von 1:9 bis 1:1 liegt.

6. Mischung nach einem der vorangehenden Ansprüche, **dadurch gekennzeichnet, dass** diese neben dem supramolekularen Rhamnolipid/Alginat-Komplex und/oder dem supramolekularen Rhamnolipid/Alginat/Pyoverdin-Komplex freies Alginat enthält, vorzugsweise nicht oberhalb von 40 Gew.-% und besonders bevorzugt nicht oberhalb von 20 Gew.-%, jeweils bezogen auf das Gesamtgewicht der supramolekularen Rhamnolipid/Alginat-Komplexe und der supramolekularen Rhamnolipid/Alginat/Pyoverdin-Komplexe.

7. Mischung nach einem der vorangehenden Ansprüche, **dadurch gekennzeichnet, dass** zusätzlich zu dem Rhamnolipid/Alginat-Komplex und/oder dem supramolekularen Rhamnolipid/Alginat/Pyoverdin-Komplex freies Pyoverdin vorliegt, vorzugsweise in einer Menge im Bereich von 0,001 bis 5 Gew.-% und besonders bevorzugt im Bereich von 0,01 bis 2,0 Gew.-%, jeweils bezogen auf das Gesamtgewicht der supramolekularen Rhamnolipid/Alginat-Komplexe und der supramolekularen Rhamnolipid/Alginat/Pyoverdin-Komplexe.

8. Mischung nach einem der vorangehenden Ansprüche, **dadurch gekennzeichnet, dass** der supramolekulare Rhamnolipid/Alginat/Pyoverdin-Komplex 55 bis 97,99 Gew.-%, vorzugweise 78 bis 97,49 Gew.%, an Rhamnolipiden, 2,0 bis 40 Gew.-%, vorzugsweise 2,5 bis 20 Gew.-% an Alginaten, und 0,01 bis 5 Gew.-%, vorzugsweise 0,01 bis 2 Gew.-%, an Pyoverdin enthält.

9. Mischung nach einem der vorangehenden Ansprüche, **dadurch gekennzeichnet, dass** diese als Rhamnolipide, insbesondere ausschließlich, Di-Rhamnolipide und Mono-Rhamnolipide enthält, wobei darin 60 bis 95 Gew.-%, insbesondere 75 bis 90 Gew.-%, Di-Rhamnolipide, insbesondere di-RL-C10C10, und 5 bis 40 Gew.-%, insbesondere 10 bis 25 Gew.-%, Mono-Rhamnolipide, insbesondere mono-RL-C10C10, jeweils bezogen auf das Gesamtgewicht der supramolekularen Rhamnolipid/Alginat-Komplexe und/oder der supramolekularen Rhamnolipid/Alginat/Pyoverdin-Komplexe, vorliegen.

10. Mischung nach einem der vorangehenden Ansprüche, **dadurch gekennzeichnet, dass** der supramolekulare Rhamnolipid/Alginat-Komplex ein Molekulargewicht nicht oberhalb von 1 x 10² bis 1 x 10⁶ kDa, bevorzugt im Bereich von 1,0 x 10³ bis 8,0 x 10⁴ kDa und besonders bevorzugt im Bereich von 7,5 x 10³ bis 9,0 x 10³ kDa aufweist.

11. Mischung nach einem der vorangehenden Ansprüche, **dadurch gekennzeichnet, dass** darin Rhamnolipide oder supramolekulare Rhamnolipid/Alginat-Komplexe oder supramolekulare Rhamnolipid/Alginat/Pyoverdin-Komplexe in einer Konzentration im Bereich von 0,01 mg bis 8 g/L, vorzugsweise im Bereich von 0,1 bis 6 g/L und besonders bevorzugt im Bereich von 0,5 bis 4,5 g/L, vorliegen.

12. Mischung nach einem der vorangehenden Ansprüche, **dadurch gekennzeichnet, dass** das Herbizid ausgewählt ist aus der Gruppe bestehend aus *N-*(Phosphonomethyl)glycin, 2-Amino-4-(hydroxy-methyl-phosphoryl)butansäure, Sulfonylharnstoffen, Chlorphenoxyessigsäuren, Benzoylisoxazolen, Phenylharnstoffen, ALS-Hemmer, HPPD-Hemmer, ACCase-Hemmer, insbesondere Cyclohexanedione (DIM), Phenylpyrazoline und/oder Aryloxyphenoxypropionate, Triazine und deren Mischungen.

13. Verwendung von Rhamnolipiden in Kombination mit mindestens einem Herbizid oder von Rhamnolipiden und Alginaten und/oder Pyoverdin in Kombination mit mindestens einem Herbizid oder von mindestens einem supramolekularen Rhamnolipid/Alginat-Komplex, insbesondere mit einem Molekulargewicht nicht oberhalb von 1 x 10⁶ kDa, mit mindestens einem Herbizid oder von mindestens einem supramolekularen Rhamnolipid/Alginat/Pyoverdin-Komplex in Kombination mit mindestens einem Herbizid, insbesondere Verwendung einer Mischung gemäß einem der vorangehenden Ansprüche, zur Ertragssteigerung landwirtschaftlicher Nutzpflanzen und/oder als Herbizid.

14. Verwendung von Rhamnolipiden oder von Rhamnolipiden und Alginaten und/oder Pyoverdin, insbesondere einer Mischung enthaltend oder von mindestens einem supramolekularen Rhamnolipid/Alginat-Komplex, insbesondere mit einem Molekulargewicht nicht oberhalb von 1 x 10⁶ kDa, oder von mindestens einem supramolekularen Rhainnolipid/Alginat/Pyoverdin-Komplex, insbesondere Verwendung einer Mischung gemäß einem der Ansprüche 1 bis 12, zur Steigerung der herbiziden Wirksamkeit von Herbiziden, insbesondere gegen monokotyle Schadpflanzen und/oder dikotyle Unkräuter.
